# EUROPEAN PATENT APPLICATION

(11) **EP 4 417 396 A1**
(43) Date of publication of application: **21.08.2024**
(21) Application number: 24157504.2
(22) Date of filing: 14.02.2024
(51) Int. Cl.: B29C 64/00, B29C 44/02, A43B 17/14, B33Y 80/00, A43B 13/12, A43B 13/18, B29C 44/34

(54) **METHODS FOR MANUFACTURING A FOAM COMPONENT**

(30) Priority: 16.02.2023 US 202363446128 P
(71) Applicant: PUMA SE, 91074 Herzogenaurach (DE)
(72) Inventor: HARTMANN, Matthias, 91301 Forchheim (DE); BONIN, Mauro, 90419 Nürnberg (DE); DONOVAN, Patrick, 90766 Fürth (DE)
(74) Representative: Gosdin, Carstensen & Partner Patentanwälte Partnerschaftgesellschaft mbB

(57) **Abstract**

A method of manufacturing a foam component(306) includes printing a preform (302) with a three-dimensional printer (304). The preform is formed from a pre-saturated mixture (308) of a base material that is at least partially saturated with a foaming agent (204). The preform is foamed by heating the preform to be at or above a glass transition temperature of the base material, thereby causing the foaming agent to nucleate and expand to form the foam component (228). Foaming occurs at atmospheric pressure. The preform includes a preliminary lattice structure (118) that corresponds with a final lattice structure of the foam component.

## Description

### BACKGROUND

### Field of the Invention

The present disclosure relates generally to systems and methods for manufacturing foam components, for example, foam components for use in articles of footwear.

### Description of the Background

Generally, an article of footwear includes an upper defining an interior space configured to receive a foot of a user. A sole structure is typically attached to a lower end of the upper to extend between the upper and a support surface, *e.g*., the ground. As a result, the sole typically provides stability and cushioning to the user when the shoe is being worn and/or is in use. In some instances, the sole may include multiple components, such as an outsole, a midsole, and an insole. The outsole may provide traction to a bottom surface of the sole, and the midsole may be attached to an upper surface of the outsole to extend generally between the outsole and the upper.

In many cases, at least a portion of the sole structure, *e.g*., the midsole, can be a foam component that is formed using one or more molds. With conventional processes, such foam components are typically formed using either an injection molding process or a compression molding process. In an injection molding process, a liquid material, typically a polymeric material, is injected into a mold cavity and cured to form the foam component. In a compression molding process, a preform is placed in a mold and then heated to expand the preform within the mold to form the foam component. However, these types of conventional molding processes require large and expensive molds, and can also limit the types of geometries that can be produced. As a result, sole structures formed with conventional compression and injection molding techniques are generally not customizable to a specific user and can also be limited with respect to various performance characteristics, for example, cushioning, elasticity, stability, density, and weight.

More recently, new techniques in three-dimensional printing have enabled the manufacture of complex geometries that were not previously possible or too costly to manufacture with injection and compression molding, *e.g*., undercuts, overhangs, lattice structures, etc. Correspondingly, these three-dimensional printing techniques have allowed for the manufacture of sole structures that can be customized according to the needs and desired performance characteristics of a particular user or application. However, current three-dimensional processes are limited in other ways, in particular, in the types of materials that can be used. For example, conventional three-dimensional printing techniques are generally limited to producing solid, un-foamed components.

### SUMMARY

The systems and methods, as described herein, allow for three-dimensional printing of foam components, for example, a sole structure of an article of footwear, using a wider range of materials, as compared with conventional three-dimensional printing techniques. In particular, such systems and methods can allow for printing of a supercritical foam component, in which a preform of a foamed component can be printed using a mixture of a base material and an embedded or dissolved supercritical fluid, *i.e.,* a foaming agent. The printed preform can be placed into an autoclave, where the supercritical fluid can be expanded to cause foaming of the preform, thereby forming the desired foam component.

According to an aspect of the disclosure, a method of manufacturing a foam component can include printing a preform with a three-dimensional printer and foaming the preform to form the foam component. The preform can be printed from a pre-saturated mixture that includes a base material and a foaming agent.

According to another aspect of the disclosure, a method of manufacturing a sole structure for an article of footwear can include printing a preform with a three-dimensional printer. The preform can be printed using a using a single-phase solution of a thermoplastic material and a supercritical fluid, and can include a preliminary lattice structure. The preform can be heated to be at or above a glass transition temperature of the thermoplastic material to cause nucleation of the supercritical fluid within the preform and expand the preform to form a midsole. The midsole can have a final lattice structure made of foamed material, which corresponds with the preliminary lattice structure.

According to another aspect of the disclosure, a foaming system can include a three-dimensional printer that can print a preform. The preform can be printed from a pre-saturated mixture that includes a base material and a foaming agent. The foaming system can include a heat tunnel that can receive the preform from the three-dimensional printer. The heat tunnel can be at atmospheric pressure and can heat the preform to be at or above a glass transition temperature of the base material to cause foaming of the preform.

### BRIEF DESCRIPTION OF THE DRAWINGS

FIG. 1 is a top and lateral perspective view of an article of footwear according to aspects of the present disclosure;
FIG. 2 is a lateral side view of the article of footwear of FIG. 1;
FIG. 3 is a medial side view of the article footwear of FIG. 1;
FIG. 4 is a top plan view of the article of footwear of FIG. 1;
FIG. 5 is a top plan view of the article of footwear of FIG. 1, with an upper removed and a user's skeletal foot structure overlaid on the article of footwear;
FIG. 6 is a flowchart of a method for manufacturing a foam component;
FIG. 7 is a schematic rendering of a foaming system according to the present disclosure;
FIG. 8 is another schematic rendering of a foaming system in accordance with FIG. 7; and
FIGS. 9A-9D show examples of foam component arrangements that can be formed using the method of FIG. 6 and foaming systems of FIGS. 7 and 8.

### DETAILED DESCRIPTION OF THE DRAWINGS

The following discussion and accompanying figures disclose various embodiments or configurations of a shoe. Although embodiments are disclosed with reference to a sports shoe, such as a running shoe, tennis shoe, basketball shoe, etc., concepts associated with embodiments of the shoe may be applied to a wide range of footwear and footwear styles, including crosstraining shoes, football shoes, golf shoes, hiking shoes, hiking boots, ski and snowboard boots, soccer shoes and cleats, walking shoes, and track cleats, for example. Concepts of the shoe may also be applied to articles of footwear that are considered non-athletic, including dress shoes, sandals, loafers, slippers, and heels. In addition to footwear, particular concepts described herein may also be applied and incorporated in other types of articles, including apparel or other athletic equipment, such as helmets, padding or protective pads, shin guards, and gloves. Even further, particular concepts described herein may be incorporated in cushions, backpacks, suitcases, backpack straps, golf clubs, or other consumer or industrial products. Accordingly, concepts described herein may be utilized in a variety of products.

The term "about," as used herein, refers to variation in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "near," "about," and "approximately" refer to a range of values ± 5% of the numeric value that the term precedes.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Further, as used herein, unless otherwise defined or limited, directional terms are used for convenience of reference for discussion of particular figures or examples. For example, references to "downward," or other directions, or "lower" or other positions, may be used to discuss aspects of a particular example or figure, but do not necessarily require similar orientation or geometry in all installations or configurations.

The terms first, second, third, etc. may be used herein to describe various elements, components, regions, layers and/or sections. These elements, components, regions, layers and/or sections should not be limited by these terms. These terms may be only used to distinguish one element, component, region, layer, or section from another region, layer, or section. Terms such as "first," "second," and other numerical terms do not imply a sequence or order unless clearly indicated by the context. Thus, a first element, component, region, layer, or section discussed below could be termed a second element, component, region, layer, or section without departing from the teachings of the example configurations.

The present disclosure is directed to an article of footwear or specific components of the article of footwear, such as an upper or a sole or sole structure, and methods for making the same. The upper may comprise a knitted component, a woven textile, a non-woven textile, leather, mesh, suede, or a combination of one or more of the aforementioned materials. The knitted component may be made by knitting of yarn, the woven textile by weaving of yarn, and the non-woven textile by manufacture of a unitary non-woven web. Knitted textiles include textiles formed by way of warp knitting, weft knitting, flat knitting, circular knitting, or other suitable knitting operations. The knit textile may have a plain knit structure, a mesh knit structure, or a rib knit structure, for example. Woven textiles include, but are not limited to, textiles formed by way of any of the numerous weave forms, such as plain weave, twill weave, satin weave, dobbin weave, jacquard weave, double weaves, or double cloth weaves, for example. Non-woven textiles include textiles made by air-laid or spun-laid methods, for example. The upper may comprise a variety of materials, such as a first yarn, a second yarn, or a third yarn, which may have varying properties or varying visual characteristics.

In some embodiments, the upper may comprise an inner layer and an outer layer, which may provide a mixture of stretch and stability. The inner layer and the outer layer may be attached to one another by stitching, an adhesive, welding, or other connection methods as are known in the art. The inner layer may be made of material that allows the upper to stretch in multiple directions, for example, a 4-way stretch material, so that the upper is both snug and comfortable, and can conform to the foot of a user. In addition to providing the upper with a layer that is flexible and can better conform to a foot of a user, the inner layer may provide for a more comfortable upper that reduces friction or other rubbing between the foot of a user and the upper. The outer layer is made from a resilient woven material, which may resist stretching.

In some cases, the upper may further include a heel cup coupled to and substantially surrounding the heel of a user. The heel cup is a rigid or semi-rigid structure that may provide additional support for the foot of a user. The heel cup may be made of a plastic, for example, thermoplastic polyurethane (TPU), or a composite material. In some cases, the heel cup is transparent or translucent.

In addition, the present disclosure relates to an article of footwear having a sole structure attached to the upper. The sole structure includes a midsole that may be attached to the upper, an outsole attached below the midsole and defining a bottom of the article of footwear, and a number of sole elements. In some embodiments, the midsole and the outsole may be a unitary body made from a foam or a rubber material, which cushion the user's foot as it impacts the ground and gives the user traction. In other embodiments, the midsole and the outsole may constitute different components which may be co-molded or adhered together by a glue or other adhesive. The midsole may be a foamed thermoplastic element that provides cushioning for a user. As a few particular examples, the midsole may be made from one or more thermoplastic materials, such as thermoplastic polyurethane, ethylene-vinyl acetate, nylon, nylon polyamide, thermoplastic elastomer, thermoplastic polyamide, etc. In some cases, a midsole can include other types of materials, including non-thermoplastic materials. The outsole may be a rubber material to increase traction and durability. In some cases, the midsole can be a multi-density midsole with two or more layers having different densities to provide tuned cushioning characteristics. Additionally, the outsole may be formed from one or more outsole sections, which can be received within a corresponding recess formed in a bottom of the midsole.

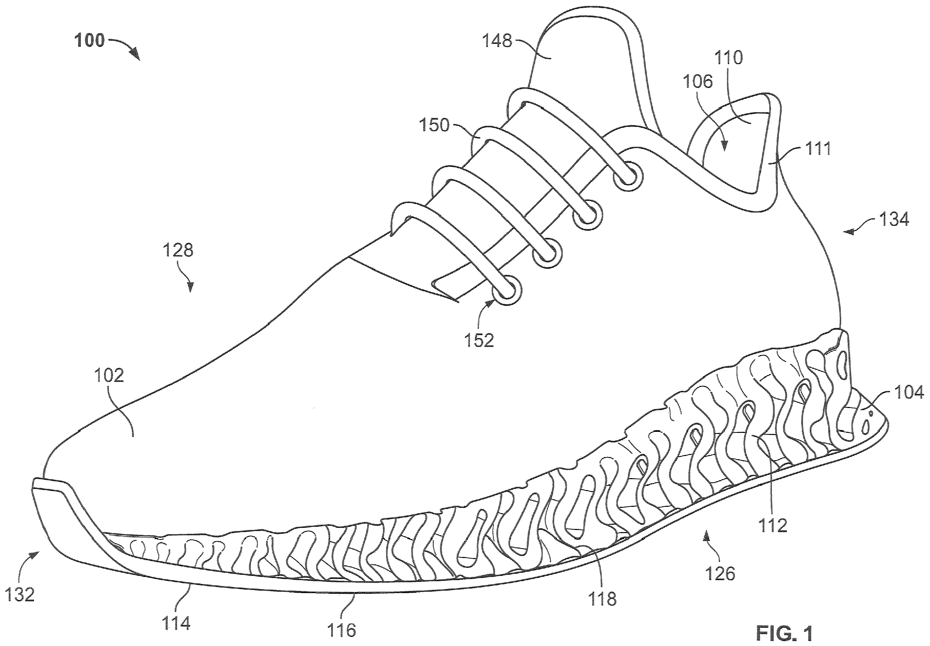

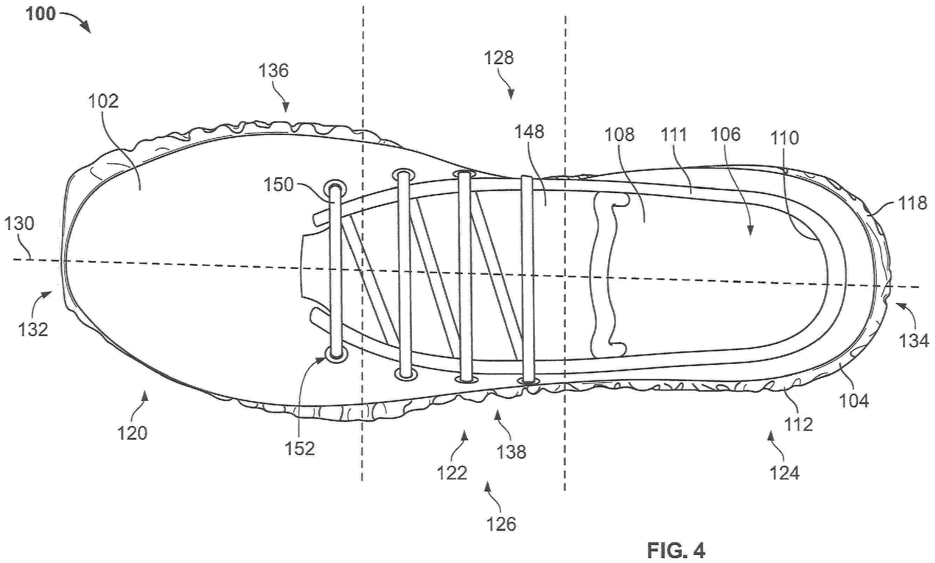

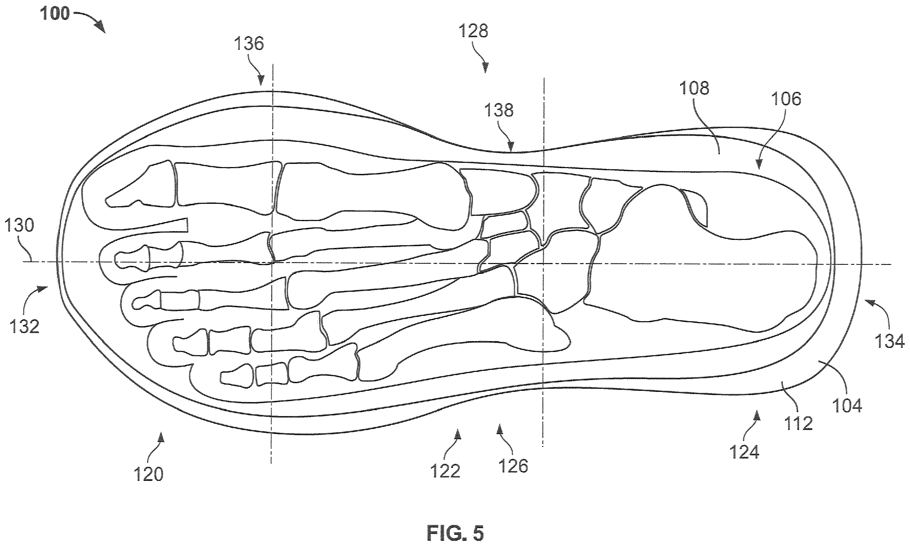

FIGS. 1-5 depict an exemplary embodiment of an article of footwear 100 including an upper 102 and a sole structure 104. As will be discussed in further detail below, the upper 102 is coupled with the sole structure 104 and together with the sole structure 104 defines an interior cavity 106 (see FIG. 4) into which a foot of a user may be inserted. The upper 102 may also include an insole 108 (see FIG. 4) positioned within the interior cavity 106 that may be connected to or in contact with an interior surface of the article of footwear 100. The insole 108 may directly contact a user's foot while the article of footwear 100 is being worn. In some embodiments, an upper may include a liner 110 that makes the article of footwear 100 more comfortable to wear, for example, by reducing friction between the foot of the user and the article of footwear 100 when the article of footwear 100 is being worn, or providing moisture wicking properties. The liner 110 may line the entire interior cavity 106 or only a portion of the interior cavity 106. In other embodiments, a collar or binding 111 may surround the opening of the interior cavity 106 to secure the liner 110 to the upper 102 or to provide an aesthetic element on the article of footwear 100. Furthermore, the sole structure 104 includes a midsole 112 and an outsole 114 coupled to and disposed generally below the midsole 112. The outsole 114 defines a bottom surface 116 of the article of footwear 100 that is configured to contact the ground. In some embodiments, lugs (not shown) or other tractive elements may be provided along the bottom surface 116 to provide a user with increased traction.

The article of footwear 100 generally defines a forefoot region 120, a midfoot region 122, and a heel region 124. The forefoot region 120 generally corresponds with portions of the article of footwear 100 that encase portions of the foot that include the toes, the ball of the foot, and joints connecting the metatarsals with the toes or phalanges. The midfoot region 122 is proximate and adjoining the forefoot region 120, and generally corresponds with portions of the article of footwear 100 that encase the arch of a foot, along with the bridge of a foot. The heel region 124 is proximate and adjoining the midfoot region 122 and generally corresponds with portions of the article of footwear 100 that encase rear portions of the foot, including the heel or calcaneus bone, the ankle, or the Achilles tendon.

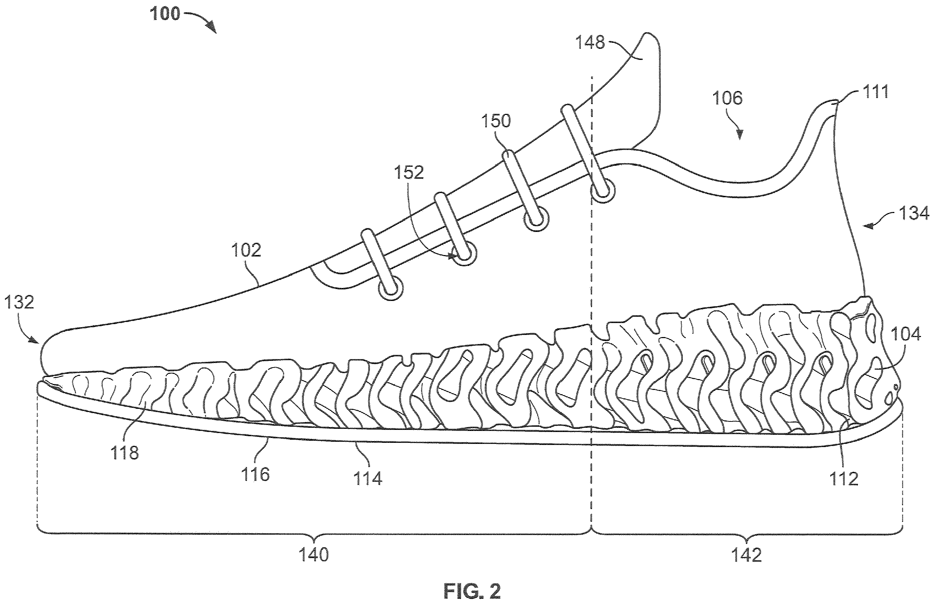

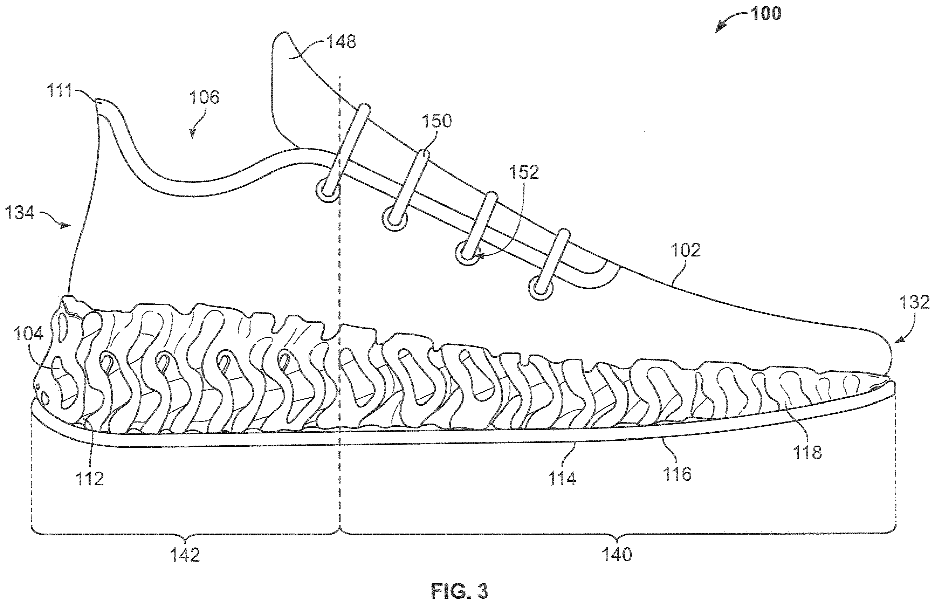

The article of footwear 100 also defines a lateral side 126 (see FIG. 2), and a medial side 128 (see FIG. 3). Further, the article of footwear 100 defines a longitudinal axis 130 (see FIG. 3) that extends from a toe end 132, located at a distal end of the forefoot region 120, to a heel end 134, located at a distal end of the heel region 124 opposite the toe end 132. The longitudinal axis 130 defines a middle of the article of footwear 100 with the lateral side 126 extending from one side of the longitudinal axis 130 and the medial side 128 extending from the other. Put another way, the lateral side 126 and the medial side 128 adjoin one another along the longitudinal axis 130. In particular, the lateral side 126 corresponds to an outside portion of the article of footwear 100 and the medial side 128 corresponds to an inside portion of the article of footwear 100. As such, left and right articles of footwear have opposing lateral 126 and medial 128 sides, such that the medial sides 128 are closest to one another when a user is wearing the article of footwear 100, while the lateral sides 126 are defined as the sides that are farthest from one another while being worn.

The forefoot region 120, the midfoot region 122, the heel region 124, the medial side 128, and the lateral side 126 are intended to define boundaries or areas of the article of footwear 100, and collectively span an entire length of the article of footwear 100, from the toe end 132 to the heel end 134. It should be appreciated that aspects of the disclosure may refer to portions or elements that are coextensive with one or more of the forefoot region 120, the midfoot region 122, the heel region 124, the medial side 128, or the lateral side 126. The forefoot region 120 extends from the toe end 132 to a widest portion 136 of the article of footwear 100, i.e., a distance between the medial side 128 and the lateral side 126 of the sole structure 104. The midfoot region 122 extends from the widest portion 136 to a thinnest portion 138 of the article of footwear 100, i.e., a distance between the medial side 128 and the lateral side 126 of the sole structure 104. The heel region 124 extends from the thinnest portion 138 to the heel end 134 of the article of footwear 100.

The lateral side 126 begins where the toe end 132 intersects the longitudinal axis 130 and bows outward, i.e., away from the longitudinal axis 130, along the forefoot region 120 toward the midfoot region 122. At the widest portion 136, the lateral side 126 bows inward, i.e., toward the longitudinal axis 130 toward the thinnest portion 138, entering the midfoot region 122. Upon reaching the thinnest portion 138, the lateral side 126 bows outward and extends into the heel region 124. The lateral side 126 then bows back inward toward the heel end 134 and terminates where the heel end 134 intersects with the longitudinal axis 130.

The medial side 128 begins where the toe end 132 intersects the longitudinal axis 130 and bows outward, i.e., away from the longitudinal axis 130, along the forefoot region 120 toward the midfoot region 122. At the widest portion 136, the medial side 128 bows inward, i.e., toward the longitudinal axis 130, toward the thinnest portion 138, entering the midfoot region 122. Upon reaching the thinnest portion 138, the medial side 128 bows outward and extends into the heel region 124. The medial side 128 then bows back inward toward the heel end 134 and terminates where the heel end 134 intersects with the longitudinal axis 130.

It should be understood that numerous modifications may be apparent to those skilled in the art in view of the foregoing description, and individual components thereof, may be incorporated into numerous articles of footwear. Accordingly, aspects of the article of footwear 100 and components thereof, may be described with reference to general areas or portions of the article of footwear 100, with an understanding the boundaries of the forefoot region 120, the midfoot region 122, the heel region 124, the lateral side 126, and/or the medial side 128 as described herein may vary between articles of footwear. Furthermore, aspects of the article of footwear and individual components thereof, may also be described with reference to exact areas or portions of the article of footwear 100 and the scope of the appended claims herein may incorporate the limitations associated with these boundaries of the forefoot region 120, the midfoot region 122, the heel region 124, the lateral side 126, and/or the medial side 128 discussed herein.

With continued reference to FIGS. 1-5, an upper is configured to at least partially enclose the foot of a user and may be made from one or more materials. In the illustrated embodiment, the upper 102 is disposed above and is coupled to the sole structure 104, and defines the interior cavity 106 that receives and secures a foot of a user. The upper 102 may be defined by a foot region 140 and an ankle region 142. In general, the foot region 140 extends upwardly from the sole structure 104 and through the forefoot region 120 and the midfoot region 122, and, in some embodiments, into the heel region 124. The ankle region 142 is primarily located in the heel region 124; however, in some embodiments, the ankle region 142 may partially extend into the midfoot region 122.

The upper 102 extends along the entirety of each of the medial side 128 and the lateral side 126, as well as extending over the top of the forefoot region 120 and around the heel region 124. An upper can be formed from one or more layers. For example, many conventional uppers are formed from multiple elements, e.g., textiles, polymer foam, polymer sheets, leather, and synthetic leather, that are joined through bonding or stitching at a seam. In various embodiments, a knitted component may incorporate various types of yarn that may provide different properties to an upper. In other embodiments, the upper may incorporate multiple layers of different materials, each having different properties, for example, increased breathability or moisture wicking.

With reference to the material(s) that comprise the upper 102, the specific properties that a particular type of yarn will impart to an area of a knitted component may at least partially depend upon the materials that form the various filaments and fibers of the yarn. For example, cotton may provide a soft effect, biodegradability, or a natural aesthetic to a knitted material. Elastane and stretch polyester may each provide a knitted component with a desired elasticity and recovery. Rayon may provide a high luster and moisture absorbent material, wool may provide a material with an increased moisture absorbance, nylon may be a durable material that is abrasion-resistant, and polyester may provide a hydrophobic, durable material.

Other aspects of a knitted component may also be varied to affect the properties of the knitted component and provide desired attributes. For example, a yarn forming a knitted component may include monofilament yarn or multifilament yarn, or the yarn may include filaments that are each formed of two or more different materials. In addition, a knitted component may be formed using a particular knitting process to impart an area of a knitted component with particular properties. Accordingly, both the materials forming the yarn and other aspects of the yarn may be selected to impart a variety of properties to particular areas of the upper 102.

A number of other features may also be coupled to or included in an upper to provide or enhance certain properties of the upper. For example, the upper 102 can include a tongue 148 that may further include a tongue lining and/or a foam pad to increase comfort. The tongue 148 may be a separate component that is attached to the upper 102 or it may be integrally formed with one or more layers of the upper 102.

Additionally, an upper can also include a tensioning system, e.g., laces 150, that allows a user to adjust the upper to fit a foot of a user. The tensioning system can extend through a midfoot region and/or a forefoot region of the upper and may be attached to the upper by an attachment structure. For example, in the illustrated embodiment, the upper 102 includes a plurality of holes 152, e.g., punch holes or eyelets, that are configured to slidably receive the laces 150 so that the user can secure the article of footwear 100 to a foot, e.g., by tightening and tying the laces 150. In other embodiments, a tensioning system may be a laceless fastening system, or other type of tensioning system known in the art.

Further, in some instances, other elements, e.g., plastic material, logos, trademarks, etc., may also be applied and fixed to an exterior surface of the upper 102 using glue or a thermoforming process. In some embodiments, the properties associated with the upper 102, e.g., a stitch type, a yarn type, or characteristics associated with different stitch types or yarn types, such as elasticity, aesthetic appearance, thickness, air permeability, or scuff-resistance, may be varied.

With continued reference to FIGS. 1-5, the upper 102 is joined with the sole structure 104, which extends between the upper 102 and the ground. The sole structure 104 includes the midsole 112 and the outsole 114. In other embodiments, a sole structure may also include one or more other components, which may include a lasting board, a plate, or a strobel board (not shown), that are disposed between a midsole and an upper. Additionally, in some cases, a sole structure can further include a heel cup that couples with the upper in the heel region via an adhesive or stitching and provides additional support to a heel of a user. More specifically, a heel cup may be made from a rigid or semi-rigid material, for example TPU or a composite that allows the heel cup to flex or give as needed when a user is running or engaging in other activities, but otherwise provide more rigid support to the heel of a user. In some embodiments, a heel cup can be made of a translucent or clear TPU and may be used to enhance the aesthetic appeal.

The outsole 114 is defined as a portion of the sole structure 104 that at least partially contacts an exterior surface, e.g., the ground, when the article of footwear 100 is worn. Like the midsole 112, the outsole 114 can extend along the length of the sole structure 104, throughout the forefoot region 120, the midfoot region 122, and the heel region 124, and across the width of the sole structure 104 from a lateral side 126 to a medial side 128. However, in other embodiments, an outsole may include discrete outsole portions that only extend through portions of any of the forefoot region 120, the midfoot region 122, and the heel region 124. In some embodiments, the outsole 114 may be fabricated from an injection molded thermoplastic material, e.g., thermoplastic polyurethane, EVA, polyolefin elastomer, a rubber material, or mixtures thereof, which can resist wear resulting from contact with the ground in addition to increasing traction.

The midsole 112 is defined as the portion of the sole structure 104 that extends between the upper 102 and the outsole 114. That is, the midsole 112 can be coupled with the upper 102, e.g., via the insole 108, at an upper surface of the midsole 112 and can be coupled with the outsole 114 on a lower surface of the midsole 112, opposite the upper 102. The midsole 112 extends along the length of the sole structure 104, throughout the forefoot region 120, the midfoot region 122, and the heel region 124. Additionally, the midsole 112 extends across the width of the sole structure 104 from a lateral side 126 to a medial side 128. However, in other embodiments, a midsole may include discrete midsole portions that only extend through portions of any of the forefoot region 120, the midfoot region 122, and the heel region 124.

The midsole 112 generally acts to cushion a user by absorbing the impact forces resulting from a foot of a user coming into contact with the ground. To provide the desired cushioning characteristics, the thickness of the midsole 112, e.g., a dimension taken along a direction that is normal to the bottom surface 116, can be varied, with thicker regions providing greater cushioning and stability, e.g., the heel region 124 and thinner regions providing lesser cushioning and greater flexibility, e.g., the forefoot region 120.

Additionally, midsoles are generally made from resilient materials that can absorb impacts by compressing and then returning to their original shape, thereby returning the absorbed energy back to the user. With conventional midsoles that have generally solid cross sections, cushioning and impact absorption is typically provided by the material of the midsole itself, with softer, more easily compressible materials providing greater cushioning than harder and less-compressible materials. Correspondingly, conventional midsoles are generally foam components that are formed from one or more thermoplastic foam materials, e.g., thermoplastic polyurethane (TPU), ethylene-vinyl acetate (EVA), nylon, nylon polyamide, thermoplastic polyester elastomer (TPEE), thermoplastic polyamide, polyolefin elastomer (POE), etc., or combinations thereof. For example, the first material can be a mixture of about 70% TPU and about 30% TPEE, or a mixture of about 78% EVA, about 10% TPEE, and about 12% POE.

However, while conventional midsoles may rely primarily on the compression of material from which it is made, it is also possible to use a three-dimensionally printed structure, e.g., a three-dimensional lattice, that provides cushioning by absorbing energy through select deformation of the three-dimensional structure. That is, in the context of lattice-like structures, rather than absorbing energy primarily via the microstructure of the midsole material, cushioning can be provided by the bending, stretching, or twisting of the lattice macrostructure. Correspondingly, it is also possible to arrange the lattice structure in such a way as to convert the impact forces into a propulsive force to help move the user forward. Moreover, such lattice structures can be customized to provide the specific cushioning characteristics desired by a particular user, or in accordance with a specific use.

As shown in FIGS. 1-4, the midsole 112 is configured as a three-dimensional lattice structure 118 with a plurality of interlinking beams arranged into a geometric pattern. The three-dimensional lattice structure of midsole 112 is only one type of structure that can be used. In other cases, other types or a combination of other types of three-dimensional structures can also be used, for example, beam or strut, plate, planar, gyroid, stochastic, or any other type of lattice structure, which can also be combined with portions that do not include lattice structures (e.g., solid portions). Correspondingly, such lattice structures include both periodic lattices with a repeating unit cell structure and random lattice structures without a repeating unit cell.

The lattice structure 118 can be formed by three-dimensional printing. However, with conventional three-dimensional printing processes, it is generally only possible to create printed structures out of solid, un-foamed materials. As a result, conventional three-dimensional printed components, for example, midsoles, are typically made out of comparatively harder and denser materials. This can cause three-dimensionally printed midsoles to often be heavier than their conventional foam counterparts, while also being unable to compress like foamed materials to provide additional cushioning.

The present disclosure provides improved systems and methods for forming or manufacturing a foam component with a three-dimensionally printed structure, for example, a midsole. More specifically, the systems and methods of the present disclosure provide a manufacturing process that allows for three-dimensional printing of supercritical foam components, in particular, those with complex geometries, e.g., three-dimensional lattice structures, undercuts, enclosed voids, etc., that may be either impossible or prohibitively complex or costly to produce using conventional methods. By allowing for three-dimensional printing of foam components, improved cushioning characteristics can be achieved by taking advantage of both the compressibility of the foam material itself, but also the deformation of the three-dimensional lattice macrostructure. Further, the use of three-dimensional printing can also reduce waste, for example, as compared with milling a lattice or lattice-like structure from a block of material.

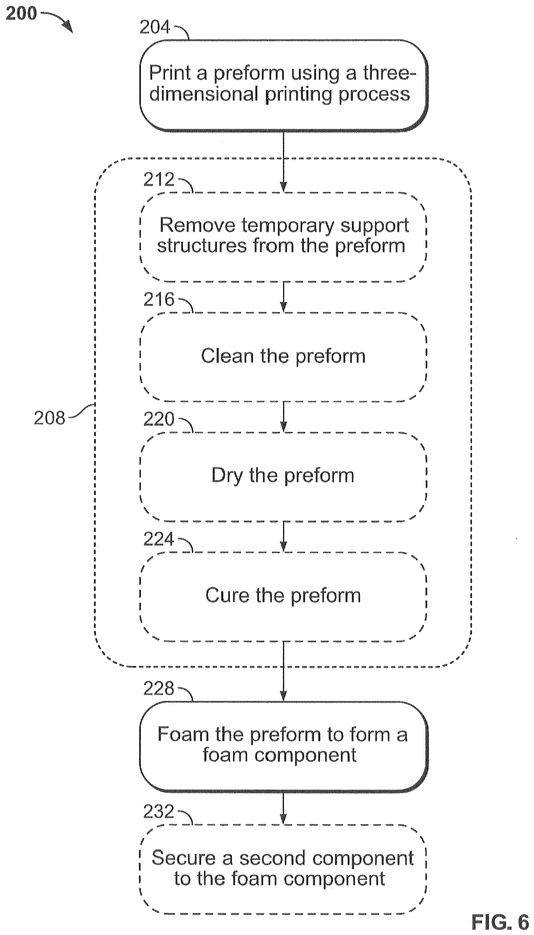

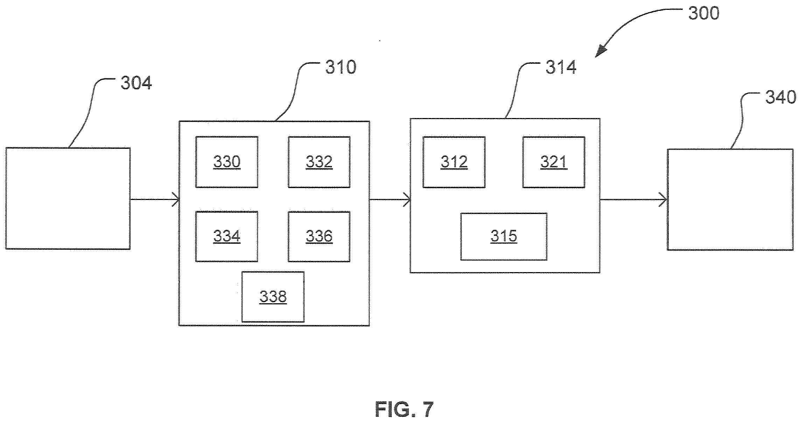

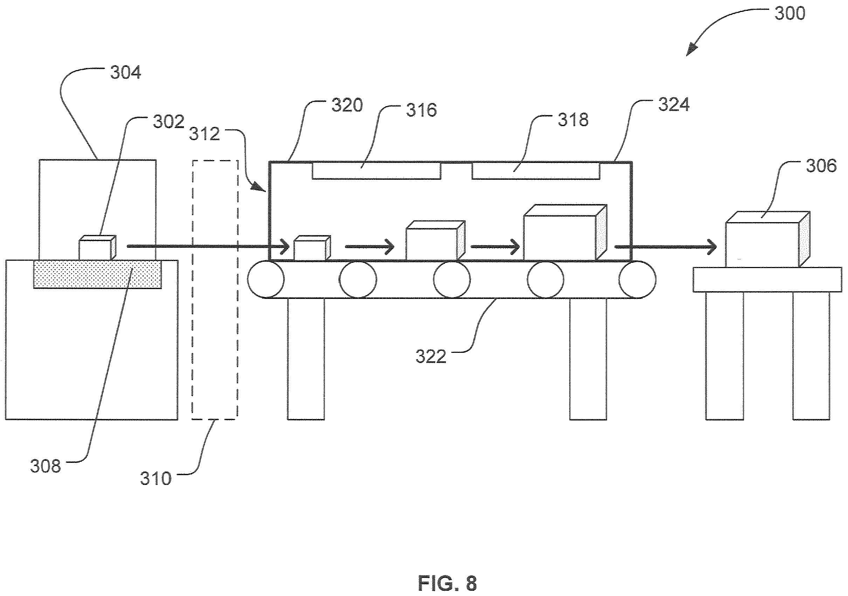

FIG. 6 illustrates a method 200 for manufacturing a foam component. For example, a foam component can be configured as a midsole (e.g., the midsole 112), or another component of an article of footwear (e.g., the article of footwear 100). While the method 200 is described below with reference to various steps, it is appreciated that not all steps may be required. Further, the steps may not be carried out in the order presented below, and some steps may be performed simultaneously. Additionally, while the method is described in connection with an example foaming system 300 shown in FIGS. 7 and 8, the method 200 may also be performed using other types of foaming systems.

The method 200 may initiate at step 204 by printing a preform 302 using a three-dimensional printing process 304 (e.g., a three-dimensional printer), which can be expanded in a foaming process to form a foam component 306, e.g., the midsole 112. In general, the preform 302 can be sized and shaped to be a substantially miniaturized version of the final foam component, so as to allow for expansion during foaming. That is, the preform 302 can share substantially the same geometry, e.g., an outer profile, a surface texture, or other decorative or performance elements, such as a lattice structure (see e.g., lattice structure 118), of the final foam component to be formed. For example, the preform 302 may be scaled down by a scale factor relative to a final, production-intent size, e.g., volume, of the final foam component being made. The preform may be printed based on a scaled model of the foam component. In some cases, the size of the preform 302 may be about 70% smaller, about 65% smaller, about 60% smaller, about 55% smaller, about 50% smaller, about 45% smaller, about 40% smaller, about 35% smaller, or about 30% smaller than the final, e.g., production-intent, size of the final foam component. Accordingly, in some embodiments, the initial size of the preform may be between about 70% and about 30% smaller, between about 65% and about 35% smaller, or between about 60% and about 40% smaller than the desired final size of the foam component. Additionally, in some embodiments, the initial size of the preform 302 may be between about 70% and about 60% smaller, between about 50% and about 40% smaller, or between about 30% and about 20% smaller than the final size of the foam component. Thus, a scale factor between the initial size of the preform 302 and a size of the final foam component 306 can reduce a size of the preform 302 by a predetermined amount, so that the preform 302 may be expanded to form the foam component 306 at the expanding or foaming process at step 228, discussed below.

In some embodiments, a preform 302 may be uniformly scaled by a scale factor described, relative to the final size of the foam component. For example, the scaling of the preform 302 can be uniform in volume about all coordinate axes defined by the sole assembly. However, it is also possible that, in some embodiments, the scale factors described herein may vary across the sole assembly. For example, some portions of the sole assembly may be scaled down in volume greater or less than other portions of the sole assembly. In that regard, the mass properties of the final foam component 306 may determine the magnitude of the scale factor along various portions of the preform 302, with portions of the preform 302 that form regions with greater thickness or volume in the foam component being scaled down more than portions of the preform 302 that form regions with lesser thickness or volume in the final foam component 306. That is, in some embodiments, a gradient defined by the scale factor may be correlated to a geometric characteristic of the final foam component 306, e.g., thickness, volume, or another geometric property defined along at least one coordinate axis, with areas that define a larger geometric characteristic being scaled down more than areas that define a smaller geometric characteristic. Further, in some embodiments, the scale factors described herein may scale down the preform 302 in one direction or along one coordinate axis, e.g., a y-axis or the coordinate axis that is perpendicular to a ground upon which a user walks, or, with respect to the article of footwear 100, an axis that is normal to a bottom surface of the article of footwear 100. The preform 302, with the scaled-down size in one direction, may then be expanded along the one direction. Thus, scaling the preform to the final size of the foam component can be achieved by foaming the preform in order to form into the desired foam component. The desired foam component can be in any shape or size.

To allow for foaming of the preform 302, the preform 302 can be made from a pre-saturated mixture 308 of a base material and a foaming agent embedded or dissolved therein. The base material can be fully or partially saturated with the foaming agent. In some cases, a base material of a preform can be a liquid or powdered thermoplastic material, e.g., thermoplastic polyurethane (TPU), ethylene-vinyl acetate (EVA), nylon, nylon polyamide, thermoplastic elastomers (TPE), thermoplastic polyester elastomer (TPEE), thermoplastic polyamide, polyolefin elastomer (POE), polystyrene (PS), polylactic acid (PLA), polypropylene (PP), polyvinyl chloride (PVC), etc., or combinations thereof. For example, the first material can be a mixture of about 70% TPU and about 30% TPEE, or a mixture of about 78% EVA, about 10% TPEE, and about 12% POE. In some cases, the base material can be a thermosetting polymer which can undergo a curing process following three-dimensional printing and foaming. Curing can be induced by heat or other types of radiation to cause irreversible curing of the base material, which can permanently set the shape of the final foam component. Thermosetting polymers can include, for example, polyurethane, polyester resin, ABS, polycarbonate, etc. Thermosetting polymers maybe used to form comparatively rigid and light weight foam components, such as heel cups, sole plates, cleat frames or chassis, etc. while thermoplastic polymers can provide for more resilient components, such as a midsole or portions of an upper. Such base materials can also be useful for forming other types of garments, for example, shoulder pads, elbow pads, shin guards, helmets, etc. In some cases, the base material may include other types of materials (i.e., additives), such as carbon fibers or fiberglass, etc., to control the material properties of the final components.

Correspondingly, the foaming agent can be a physical foaming agent, a chemical foaming agent, or mixtures thereof that is dissolved within the base material. In some cases, a physical foaming agent can be pentane, isopentane, cyclopentane, chlorofluorocarbons (CFC), hydrochlorofluorocarbons (HCFC), or supercritical fluid, for example, Nitrogen, Carbon-dioxide, or mixtures thereof. In some cases, a chemical foaming agent can be isocyanate, polyurethane, azodicarbonamide, hydrazine, sodium bicarbonate, and other nitrogen-based materials or materials that produce a gas in a chemical reaction to cause foaming. Further, in some cases, the pre-saturated mixture 308 can further include a coloring agent.

In some cases, it can be advantageous to use a pre-saturated mixture that is in a liquid form. The pre-saturated mixture can be provided as a single part resin that is highly viscous. For example, a pre-saturated mixture can have a viscosity at or above about 2,000 centipoise (cP). In some cases, the viscosity can range (inclusively) between about 2,000 cP and about 600,000 cP, between about 50,000 cP and 400,000 cP, and between about 100,000 cP and 300,000 cP. The particular range of viscosity may vary depending on the base material, foaming agent, and any included additives.

In some instances, the base material is a light-activated resin or a photopolymer that changes its properties when exposed to light. Some photopolymer resins produce durable and dimensionally accurate closed cell foam parts in any volume without tooling. Some photopolymer resins contain heat-activated foaming agents that are capable of being three-dimensionally printed. After the heat-activated foaming agents are printed, the photopolymer resins can be placed into a heating system such as an oven where the foaming agent creates closed cells inside the material in a tightly controlled process. The photopolymer resins can be programmed to expand between 2 to 7 times its original size. In some instances, the photopolymer resin can expand 3 to 6 times its original size. In some instances, the photopolymer resin can expand 2 to 4 times its original size. In some instances, the photopolymer resin can expand 5 to 7 times its original size. This allows the photopolymer resin to be shipped in a compact form and expand in a heat system close to the final point of use or assembly. In some instances, three-dimensional printers can process photopolymers into lattice designs, as further described herein.

Where the pre-saturated mixture 308 comprises liquid base material and a physical foaming agent dissolved therein, the pre-saturated mixture 308 can be maintained under environmental conditions so that the foaming agent is in a supercritical state. In the supercritical state, the physical foaming agent does not exist in a distinct liquid or gaseous state of matter and is also not a solid. Correspondingly, the mixture can be a single-phase solution in which the base material is saturated with the physical foaming agent. Where the mixture comprises a base material and a chemical foaming agent dissolved or otherwise captured or disposed therein, the mixture can be maintained under environmental conditions so that the chemical foaming agent is maintained in an unreacted state.

By pre-saturating the base material with the foaming agent prior to printing, a more controllable concentration and even distribution of the foaming agent within the preform 302 can be achieved, which can manifest in improved cell size uniformity and density in the final foam component 306, as compared with traditional methods of saturating preforms with supercritical fluid. That is, for example, with traditional saturation techniques, a supercritical foaming agent is placed into an autoclave with a blank of solid base material to slowly dissolve and penetrate into the blank from the outside. In some cases, this can result in a comparatively uneven and uncontrollable distribution of foaming agent within the blank, particularly where there are large variations in thickness, which in turn, can result in uneven foaming. Further, penetration of the foaming agent into the blank using traditional saturation methods often requires long dwell times, increasing overall cycle time.

Printing with the pre-saturated mixture 308 to create the preform 302 at step 204 can be done using a variety of three-dimensional printing techniques. For example, in some cases, the preform 302 can be printed using digital light printing (DLP) or other vat polymerization techniques, wherein a liquid resin, i.e., mixture of base material and foaming agent, is selectively solidified, e.g., layer by layer using a light source, e.g., an ultra-violet (UV) light source, to cure the resin and make the preform. As another example, Multi Jet Fusion printing can also be used, which utilizes a binder to fuse a powered resin, i.e., the mixture of base material and foaming agent. The preform 302 can be printed based on a corresponding three-dimensional computer model, i.e., a CAD model, of the either the preform itself, or the final foam component 306 and a scaling factor. Accordingly, the preform 302 can, for example, include a preliminary structure, e.g., a preliminary lattice structure, corresponding to the final lattice structure 118 of the midsole 112, as shown in FIGS. 1-4. The preliminary structure may or may not be a lattice itself. In some cases, the preform 302 can be formed around another component, for example, a shank or plate, which can be at least partially or fully embedded within the resultant foam component 306.

During printing, it is generally preferrable that the surrounding environmental conditions are selected so as to inhibit expansion or other activation of the foaming agent during step 204, which could result in premature or other unintentional foaming of the preform during printing. For example, in the case of DLP, the temperature of the liquid resin may be maintained below about 180 Celsius (C), or more specifically, below about 100 C, below about 50 C, or below about 30 C. Likewise, pressure and other environmental conditions can be selected and maintained so as to inhibit activation of the foaming agent. Accordingly, because the foaming agent does not expand to cause foaming during printing at step 204, the resultant, solidified preform 302 can contain a foaming agent that is encapsulated within the base material.

Optionally, the process may include a finishing system that may include cleaning, drying, and curing of the preform and a support removal system. The finishing system may be manual or automatic. Still referring to FIG. 6, in some cases, the method 200 can include performing one or more finishing processes on the preform 302 via a finishing system 310 at step 208. For example, in some cases, the particular design of the preform 302 may require temporary support structures to be printed with the preform 302 at step 204, which can provide temporary support during printing, but which are not to be incorporated into the foam component 306. Accordingly, such temporary support structures can be removed from the preform 302 at step 212. Support removal can be performed by hand, or by using one or more manual or automatic tools. Accordingly, the finishing system 310 can optionally include a support removal system 330. In some cases, a preform 302 can be cleaned at step 216, for example, by an ultrasonic or agitation washing system, to remove excess pre-saturated mixture 308 from the preform 302. Accordingly, the finishing system 310 can optionally include cleaning system 332. Correspondingly, in some cases, a preform 302 can be dried at step 220, for example, by placing the preform 302 in a drying system, such as an air or thermal drying system. Accordingly, the finishing system 310 can optionally include a drying system 334. Moreover, in some cases, a preform may be cured at step 224. For example, a preform can be cured using a UV curing device in a secondary curing step, so as to ensure that the entire preform 302 is cured. Accordingly, the finishing system 310 can optionally include a curing system 336. Operations at the finishing system 310 can include both manual and automatic (e.g., machine performed) operations. A transportation system 338 can be provided to move the preform 302 between the various stations of the finishing system 310. The transportation system 338 can include automatic transportation systems such as conveyors or robotic arms, etc., as well as manual systems.

Certain known manufacturing methods use multiple processing stations each equipped with different machinery and associated conveyors to move materials in various stages of completion between those stations. In some cases, the transportation system may include a conveyor. In one instance, the conveyor may be arranged in a line in which the preform moves through the heating system. In an alternate embodiment, the conveyor may be arranged in a circular or semicircular arrangement which would allow the material to enter and exit from the same opening. The preform may be manually place on to the conveyor or placed using an automatic system such as a robotic arm.

Still referring to FIG. 6, the method 200 can further include foaming the preform 302 at step 228 to form the desired foam component 306. That is, at step 228, the foaming agent can be activated to cause expansion and foaming of the preform 302. In some examples, foaming can be caused by heating the preform 302 via a heating system 312. The heating system 312 can be configured to apply heat to the preform 302 to raise a temperature thereof to be at or above a glass transition temperature (e.g., between about 1% and about 25%, between about 5% and about 25%, between about 5% and about 10%, between about 1% and about 5%, or between about 10% and about 25% of a glass transition temperature, inclusive, or other ranges therein) or another predetermined temperature. In some cases, the specific temperature can be between a glass transition temperature and a melting temperature of the preform material so that the preform 302 can be softened to allow for plastic deformation of the preform 302 while maintaining structural integrity and dimensional stability. For example, the temperature can be uniform or non-uniform and can range between about 80 Celsius (C )to about 260 C, between about 140 C to about 220 C, between about 115 C and about 180 C, or more or less depending on the specific material being expanded. More specifically, the autoclave can be heated to be between about 120 C and about 160 C, between about 120 C and about 150 C, or between about 120 C and about 135 C. Heating the preform 302 can also induce a physical or chemical reaction of the foaming agent within the preform 302 material that causes controlled expansion and foaming of the preform 302, as generally described above.

Heating systems can be configured in a variety of ways, including as automatic heating systems that transport a preform through the heating system, as well as manual systems. For example, the preform 302 can be heated in a heating system 312 that can be configured as a heat tunnel 314 or other heating device (e.g., a heat tube or oven,) to cause the foaming agent to expand e.g., to produce a gas, thereby foaming the preform and producing the final foam component with the lattice. As further discussed below, the heat tunnel 314 can be an open tunnel having an internal volume 316 that is open to the surrounding atmosphere (e.g., to be maintained at atmospheric pressure during foaming of the preform 302). This is different from conventional systems that utilize a pressure vessel, for example, an autoclave, that can seal against the surrounding environment to allow the internal volume to be raised above atmospheric pressure.

Accordingly, the heating system 312 can be configured with different numbers of openings for receiving the preform 302 and removal of the foam component 306. In some examples, the heating system 312 can be an oven that includes a single opening that can be used to place the preform 302 in the heating system 312 and for subsequent removal of the foam component 306. In the illustrated example, the heat tunnel 314 is configured as an open-ended oven or tunnel with a first end 320 to allow the preform 302 to enter the heating system 312 and a second end 324 for removal of the foam component 306 from the heating system 312. The heat tunnel 314 is open to the atmosphere on its ends 320, 324. In still other examples, a heating system 312 can include multiple first ends to receive preforms 302 from one or more printers 304 or multiple second ends 324 to allow the foam components 306 to exit the heating system 312.

The preforms 302 entering the heating system 312 may have differing pre-saturated mixtures or sizes that can result in different amounts of expansion or final sizes of the foam component 306. Correspondingly, in some cases the size of the second openings can vary to accommodate different sized foam components 306. In an example, a heat tunnel can have a first end and a second end. In an alternative example, the heat tunnel can have a first end for the preform to enter and the final component exits through the same first end. In another example, the heat tunnel can have a first end for the preform to enter and second, third and fourth ends for the final components to exit depending on the desired size of the final component and heating duration and temperature required. For example, the second end may be for final components that are 2 to 3 times the original size of the preform. The third end may be for final components that are 4 to 5 times the original size of the preform. The fourth end may be for final components that are 6 to 7 times the original size of the preform.

The heating tunnel 312 can include a heating system 315 to heat a preform. In the illustrated example, the heat tunnel 314 can include one or more emitters 318 that are configured to emit thermal energy (e.g., heat), or other types of energy into the internal volume of the tunnel to cause heating of a preform 302 component therein. For example, the preform 302 can be received from the three-dimensional printer 304 into a first end 320 of the heat tunnel 314 to be placed into the internal volume 316. Once in the internal volume 316, energy can be emitted by an emitter 318, causing the preform 302 to increase in temperature and allowing for foaming without the need for elevated pressures, as are typically required in conventional pressure vessel systems. The resultant foam component 306 can then exit or be removed from a first end 320 of the heat tunnel 314 or a second end 324 of the heat tunnel 314, where it can cool. In some cases, an emitter can be a thermal emitter, including, for example, resistive heating elements or open flame burners, etc. In some cases, an emitter can be a different type of emitter, for example, a microwave emitter or an infrared emitter. In some embodiments, multiple types of emitters can be used together.

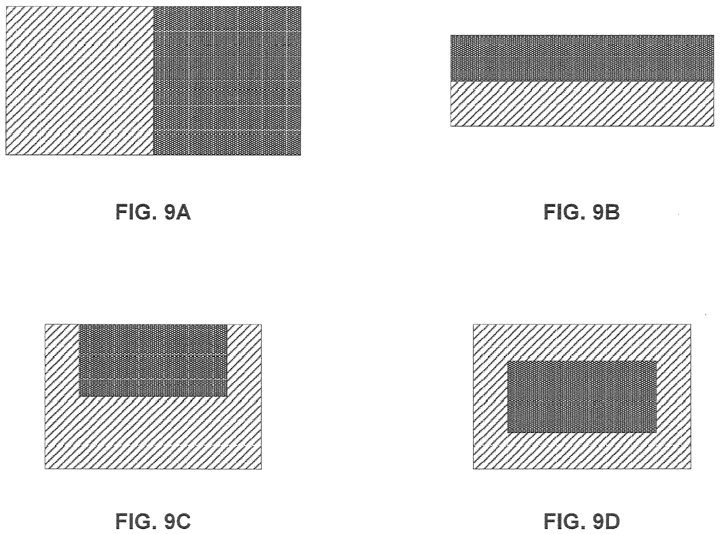

The time the preform is exposed to the heat may depend on the time spent in the heat tunnel. In one embodiment, the preform is loaded into the heat tunnel on a conveyor belt. The speed of the conveyor belt effects the time in the heat tunnel. In some instances, the heat tunnel may have heat zones in which the temperature and duration of heating are varied. By varying intensity, duration, or direction of heat application, an amount of foaming (e.g., expansion) can be controlled to vary properties of the foam component. For example, a higher temperature or duration in one zone can increase foaming as compared with a zone having a lower temperature or duration. As a more specific example, as illustrated in FIGS. 9A-D with respect to the midsole 112, increased expansion can be achieved in a first area, such as the heel region 124 while comparatively less expansion can be achieved in the forefoot region 120. In a similar vein, a first heat zone can be configured to cause expansion of a first lattice structure in a first area while a second heat zone can be configured to cause expansion of a second lattice structure in a second area. The first and second lattice structures can be located in different regions relative to a longitudinal or lateral direction of the sole structure. In some cases, the type of emission in each zone can target a different depth for expansion. That is, a first external region can undergo a first amount of expansion while a second internal region can undergo a second amount of expansion. In this way, the midsole 112 can be a dual density midsole with a first midsole 112A (e.g., outer midsole) that has a first density or other cushioning property and a second midsole 112B (e.g., an insert or inner midsole) with a second density or other cushioning property. In some cases, first and second midsoles can be configured differently, such as upper and lower midsoles, or as lateral and medial midsoles.

The heat zones may correspond with one or more emitters. In the illustrated example, the heat zones may include at first heat zone 317 corresponding with the first emitter 318 and having a first temperature, and a second zone 319 corresponding with the first emitter 318 and having a second temperature that can be different or the same as the first heat zone 317. In one embodiment, the first temperature of the first heat zone 317 is greater than the second temperature of the second heat zone 319. In one embodiment, the first temperature of the first heat zone 317 is less than the second temperature of the second heat zone 319. In one embodiment, the first temperature of the first heat zone 317 is the same as the second temperature of the second heat zone 319. In another example, the heat zones may further include a third zone having a third temperature and a fourth zone having a fourth temperature, etc. In some embodiments, the zones may have the same temperature as other zones and the zones may be defined by other parameters such as a location of the zone in the tunnel, the type of emission, a duration of emission, a direction of emission, etc. In some embodiments, the time spent in the zones may vary. For example, the time the preform 302 spends in the first heat zone 317 may be greater than the time spent in the second heat zone 319, or vice versa. In some embodiments, the time spent in each zone may be the same.

In some cases, the heat system 312 can include transportation system 321 to move the preform 302 though the heating system 312. The transportation system 321 can be a manual or automatic transportation system. For example, the heat system 312 may be manually operated such that a user may manually place the preform 302 inside of the heat tunnel 314 or an oven and may remove the final component 306 after foaming. A user may place the preform on a cart that travels along the heat system 312 and then removes the final component 306 from the cart after the heating. In some cases, a user may place the preform on a conveyor prior to heating and remove the final component from the conveyor after heating. A user may repeat this step and place the final component back into the heat tunnel and repeat the process until the desired size and shape are achieved. In some embodiments, a user may move the preform to each zone of the heat tunnel. In some instances, the heat tunnel may be automated. For example, a robotic arm may move the preform between heating zones. In some instances, the preform may be moved on a conveyor through the heat tunnel. In some embodiments, the transportation system 321 can influence and control foaming by controlling a duration of foaming (e.g., varying a speed of travel). In some cases, the transportation system 321 can control foaming in other ways, such as by varying a distance between the preform 302 and an emitter 318.

In the illustrated example, the transportation system 321 is configured as a conveyor system 322 to move the preform 302 through the heat tunnel 314. The conveyor system 322 receives the preform 302 from the printer 304 or finishing system 310 and transports the preform 302 though the heat tunnel 314 for foaming. In some cases, the first transportation system 321 and the second transportation system 338, can be part of a larger transportation system for the entire foaming system 300. In this way, a transportation system can move the preform 302 and the final foam component 304 through the entire foaming system 300. For example, the transportation system 321 and the transportation system 338 can be sections of a larger transportation system. In some cases, the transportation system 321 and the transportation system 338 can be part of a continuous conveyor that passes along the foaming system 300.

As also described above, the preform 302 can be heated in a heat tunnel 314 to be at or above a glass transition temperature of the base material. In the case of chemical foaming agents, the increase in temperature can cause a chemical reaction of the foaming agent within the preform 302. The chemical reaction can produce a gas that causes foaming of the preform 302. In the case of physical foaming agents, the increase in temperature can cause the foaming agent to begin to nucleate and expand within the base material, thereby foaming the preform 302 and forming the foam component 306. More specifically, in some cases nucleation of the foaming agent can form (closed) supercritical-fluid-filled cells within the foam component 306, which expand to form pockets of the foaming agent within the base material, thereby increasing the volume of the preform to form the foam component 306. Correspondingly, the foam component 306 can contain pockets of the foaming agent therein, e.g., pockets of nitrogen gas, carbon-dioxide gas, or mixtures thereof. In some cases, an open-cell structure can be formed, wherein the gas produced by the foaming agent can escape from some or all of the cells.

The cells can have an approximately uniform size and distribution throughout the formed foam component. The cell size, e.g., an average cell size, can depend on the specific composition of mixture, including the type of base material and foaming agent, the concentration of the foaming agent, the temperature and pressure during foaming, as well as other factors. Because cell size and distribution are approximately uniform, the density throughout the foam component can also be approximately uniform. Consequently, dimensional stability can be better preserved during expansion, allowing more minute and intricate details and structures, e.g., those corresponding to the lattice structure 118, to remain intact following expansion. Accordingly, any such decorative or performance features that are present on or within the preform 302 are also present on or within the foam component 306. Moreover, because such features can be at or near final size after foaming at step 228, the method 200 can eliminate the need for any subsequent compression steps to reduce the foam component to a final, production size. In other embodiments, a heating system can be configured to vary a rate of expansion of a preform to control a property of the foam component, as discussed above. For example, a rate of expansion can be controlled to control density so that a first region has a different density from a second region, or so that a first region has a different resiliency than a second region.

Relatedly, because the preform 302 is in a solid state and pre-saturated with the foaming agent, foaming at step 228 can be performed at atmospheric pressures, such as with the aforementioned heat tunnel 314. In this way, the method 200 can eliminate the need for more complex and costly pressure vessel systems, e.g., autoclaves, by reducing or eliminating the need for precise pressure control and/or elevated pressures during foaming. Consequently, system costs can be reduced.

To form a desired article of manufacture, for example, the article of footwear 100, one or more secondary components can be secured to the foam component 306 at step 232, or to the preform 302 prior to foaming at step 228. For example, where the foam component 306 is the midsole 112, a second component can include any of an outsole, an upper, a plate, a midsole insert such as another three-dimensionally printed or conventional cushioning element, etc. The secondary components can be secured to the foam component 304 at an assembly station 340. Accordingly, in some cases, a customized sole structure can be formed from multiple lattice structures to provide different performance characteristics in different areas. For example, a heel region could include a gyroid structure (e.g., a first lattice structure), a midfoot region could include a cubic structure (e.g., a second lattice structure), and a forefoot could include a solid structure. Accordingly, a foam component can include different types of lattice structures within a single foam component. This allows a foam component to have regions with different properties (e.g., color, density, hardness, spring constant, etc.) For example, a first lattice structure can be provided in a heel and a second lattice structure can be provided in a forefoot, which can be different from the first lattice structure. The first lattice structure can be comparatively softer than the second lattice structure to improve impact absorption during a heel strike. The second lattice structure can be configured to provide increased energy return for improved toe-off. For example, the second lattice may be configured to help propel a user forward. A second component can be secured to the foam component 306 in numerous ways, including, for example, via stitching, overmolding, an adhesive, or by inserting a first component into a second component.

Any of the embodiments described herein may be modified to include any of the structures or methodologies disclosed in connection with different embodiments. Further, the present disclosure is not limited to articles of footwear of the type specifically shown. Still further, aspects of the articles of footwear of any of the embodiments disclosed herein may be modified to work with any type of footwear, apparel, or other athletic equipment.

As noted previously, it will be appreciated by those skilled in the art that while the disclosure has been described above in connection with particular embodiments and examples, the disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

### INDUSTRIAL APPLICABILITY

Numerous modifications to the present disclosure will be apparent to those skilled in the art in view of the foregoing description. Accordingly, this description is to be construed as illustrative only and is presented for the purpose of enabling those skilled in the art to make and use the invention. The exclusive rights to all modifications which come within the scope of the appended claims are reserved.

## Claims

1. A method of manufacturing a foam component, the method comprising:
with a three-dimensional printer, printing a preform from a pre-saturated mixture that includes a base material and a foaming agent; and
foaming the preform to form the foam component.

2. The method according to claim 1, **characterized in that** the preform includes a preliminary lattice structure that corresponds with a final lattice structure of the foam component.

3. The method according to claim 1 or 2, **characterized in that** the base material is a thermoplastic material.

4. The method according to one of claims 1 to 3, **characterized in that** the foaming agent is a supercritical fluid including at least one of Nitrogen or Carbon dioxide.

5. The method according to one of claims 1 to 4, **characterized in that** the pre-saturated mixture is a single-phase solution.

6. The method according to one of claims 1 to 5, **characterized in that** the pre-saturated mixture is a powder.

7. The method according to one of claims 1 to 6, **characterized in that** the three-dimensional printer is configured as a digital light printer.

8. The method according to one of claims 1 to 7, **characterized in that** the preform is printed based on a scaled model of the foam component.

9. The method according to one of claims 1 to 8, **characterized in that** foaming the preform includes heating the preform to be at or above a glass transition temperature of the base material.

10. The method according to claim 9, **characterized in that** heat is supplied by a heat tunnel.

11. The method according to one of claims 1 to 10, **characterized in that** foaming the preform is performed at atmospheric pressure.

12. The method according to one of claims 1 to 11, **characterized in that** the foam component is a midsole for an article of footwear.

13. The method according to one of claims 1 to 12, **characterized in that** it further comprises securing a secondary component to the foam component.

14. The method according to one of claims 1 to 13, **characterized in that** the initial size of the preform is between about 70% and about 30% smaller than the size of the final foam component.

15. The method according to one of claims 1 to 14, **characterized in that** the foaming agent is at least one of a physical foaming agent or a chemical foaming agent.
